(19) Europäisches Patentamt
European Patent Office
Office européen des brevets

(11) **EP 4 209 970 A1**

(12) **EUROPEAN PATENT APPLICATION**

(43) Date of publication:
**12.07.2023 Bulletin 2023/28**

(21) Application number: **22150602.5**

(22) Date of filing: **07.01.2022**

(51) International Patent Classification (IPC):
**G06N 3/08** (2023.01)      **G06N 3/063** (2023.01)
**G06N 3/04** (2023.01)

(52) Cooperative Patent Classification (CPC):
**G06N 3/082; G06N 3/063; G06N 3/086;
G06N 3/0985;** G06N 3/0464; G06N 3/084

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Mauhn BV**
**9050 Gentbrugge (BE)**

(72) Inventor: **SEVERENS, Berg**
**Gentbrugge (BE)**

(74) Representative: **Algemeen Octrooi- en
Merkenbureau B.V.
P.O. Box 645
5600 AP Eindhoven (NL)**

(54) **METHOD FOR CONFIGURING A COMPLEX NEURAL NETWORK GIVEN A LATENCY CONSTRAINT**

(57)     A computer-implemented method for configuring a neural network, in order to optimize at least one objective function of the neural network, comprising a neural network objective function and a plurality of neuron group objective functions, according to a latency constraint defined for the neural network;
wherein the neural network comprises a plurality of neuron groups, each neuron group having a respective set of hyperparameters associated with said neuron group;
wherein each neuron group objective function is based on an accuracy contribution and a resource occupation;
wherein the method comprises:
- iteratively training the neural network by optimizing weights of the neurons of the neural network, based on the neural network objective function; and
- iteratively adapting the topology of the neural network based on the neuron group objective functions, preferably using genetic optimization.

FIG. 8

**Description**

FIELD OF THE INVENTION

The present invention generally relates to optimizing topologies of neural networks. Particular embodiments relate to a computer-implemented method for configuring a neural network, a computer-implemented method of using a neural network configured using such a method, a computer program and a computer program product corresponding with such methods, a data processing system for configuring a neural network, and a data processing system for using a neural network configured using such a system for inference.

BACKGROUND

Certain applications of artificial intelligence (AI) are known or expected to pose very demanding latency requirements to neural networks, both in training (i.e. constructing the neural networks) and in inference (i.e. using the neural networks to produce output based on input). It is in particular expected that if AI is to become more generally applicable to any type of application, this will pose extremely demanding latency requirements. In practice, whereas the state of the art is typically limited to optimizing neural networks with respect to at most a few dozen hyperparameters, it is expected that the above-mentioned applications may require to optimize neural networks with respect to many more hyperparameters, even up to millions, for a single neural network. This difference can be expressed quantitatively using the well-known method of Kolmogorov complexity. It is expected that neural networks of such a large scale will have to be trained, that their Kolmogorov complexities will be at least three orders of magnitude higher than in the current state of the art, or even higher in future more general applications.

SUMMARY

It is an insight of the inventors that such complexity requires a new approach of configuring neural networks, based on resource occupation exerted by the neural network, if the neural network is to be configured effectively at such scales.
In this context, configuring a neural network may be taken to mean determining and changing the constituent parts of the neural network, such as neurons, connections and weights.
Accordingly, it is an aim of at least some embodiments according to the present invention to provide such an approach. More in particular, it is an aim of at least some embodiments according to the present invention to allow effective configuring of complex, large scale neural networks.
In a first aspect of the present invention, there is provided a computer-implemented method for configuring a neural network, in order to optimize at least one objective function of the neural network according to a latency constraint defined for the neural network, the latency constraint representing a maximum time duration from input to the neural network up to output from the neural network and taking into account hardware performance of the computer implementing the method;

wherein the neural network has a topology comprising a plurality of neuron groups, each neuron group of the plurality of neuron groups comprising at least one neuron and having a respective set of hyperparameters associated with said neuron group;
wherein the at least one objective function comprises:

- a neural network objective function corresponding with the neural network, wherein the neural network objective function is configured for optimizing an output of the neural network; and
- a plurality of neuron group objective functions corresponding respectively to the plurality of neuron groups of the neural network, wherein each neuron group objective function is based on an accuracy contribution and a resource occupation , wherein the accuracy contribution and the resource occupation are due to the corresponding respective neuron group being included in the neural network;

wherein the method comprises:

- iteratively training the neural network by optimizing weights of the neurons of the neural network, based on the neural network objective function; and
- iteratively adapting the topology of the neural network based on the plurality of neuron group objective functions, preferably using a method of genetic optimization.

At least some embodiments according to the present invention are based on the insight of the inventors to provide a plurality of neuron groups, i.e. distinct groups of neurons that can be addressed separately from each other and that share a distinct set of hyperparameters for the distinct group, which set of hyperparameters can be set separately from the sets of hyperparameters of other neuron groups. Furthermore, at least some embodiments according to the present invention are based on the insight of the inventors to provide a plurality of neuron group objective functions corresponding respectively to the plurality of neuron groups. These neuron group objective functions are distinct from the neural network objective function that corresponds with the neural network as a whole and that is directed to optimize the output of the neural network as a whole. The neuron group objective functions are used at least in the step of iteratively adapting the topology of the neural network, preferably using a method of genetic optimization. The neuron group objective functions are based on an accuracy contribution of their corresponding respective neuron group - i.e. a given neuron group's neuron group objective function takes into account a measure of how much that given neuron group contributes to the overall accuracy of the neural network - and are further based on a resource occupation of having its corresponding respective neuron group included in the neural network - i.e. a given neuron group's neuron group objective function takes into account a measure of how many resources that given neuron group is occupying. Preferably, but not necessarily, the resource occupation, being a measure of how many resources that given neuron group is occupying is a relative measure, relating to other neuron groups in the neural network and optionally relating to potential other neuron groups in the neural network. Likewise, the accuracy contribution, being a measure of how much a given neuron group contributes to the overall accuracy of the neural network is a relative measure, relating to other neuron groups in the neural network and optionally relating to potential other neuron groups in the neural network.

By adapting the topology in a manner that takes into account the accuracy contribution and the resource occupation of respective neuron groups of the neural network, the method allows configuring of complex neural networks, i.e. neural networks of large scale, because on the one hand individual neuron groups can have specific sets of hyperparameters that are effective for those individual neuron groups, and on the other hand the individual neuron groups are subject to an optimization of resource occupation and are thus not or less likely to occupy a significant share of resources unless they contribute significantly to the neural network objective function.

In a preferred embodiment, the output of the neural network is used to select actions to be performed by an agent interacting with an environment, in particular interacting mechanically with the real-world physical environment. Examples of such an agent include a vehicle robot navigating in the real-world physical environment, or a robot controlling physical instruments. Additionally or alternatively, in some embodiments the output of the neural network may be used to categorize items, e.g. images, video, audio, multimedia, and/or elements of language. Additionally or alternatively, in some embodiments the output of the neural network may be used to synthesize (i.e. generate) such items, e.g. images, video, audio, multimedia, and/or elements of language.

Note that the neural network is implicitly dynamic, in the sense that its topology can be changed, because the method explicitly states that the topology is adapted.

Note that the steps of training the neural network and adapting the topology of the neural network are performed iteratively, which may be taken to mean that they are performed over a number of subsequent iterations, typically until a pre-defined or dynamically determined halting criterion is reached (e.g. until a desired outcome is achieved for the neural network objective function, or until an available amount of time or comparable resources has/have been used up, etc.) or alternatively continuously without halting, e.g. if a particular application benefits from having a continuously trained neural network. In practice, the neural network may be trained (preferably until convergence is reached), then the topology of the neural network may be adapted, preferably using the method of genetic optimization, and then the neural network may again be trained (preferably until convergence is reached), and then the topology of the neural network may again be adapted, preferably using the method of genetic optimization, and so on.

In an embodiment, the step of adapting the topology of the neural network comprises evaluating, for any given neuron group of the plurality of neuron groups, the resource occupation of the given neuron group, based on at least one hardware performance counter corresponding with resources of the computer occupied by the given neuron group; wherein the at least one hardware performance counter represents a load exerted on the computer implementing the method, the load being exerted at least by the given neuron group, the load relating to the given neuron group occupying any one or more of the following resources of the computer: memory, computation, and bus bandwidth.

In this manner, basing the step of adapting the topology on the at least one hardware performance counter allows to take into account the influence on the computer resources exerted by the existence and the connections of the neuron groups. This in turn allows the method to use a handy parameter, namely the at least one hardware performance counter. Examples of such hardware performance counters will be described below. Because the at least one hardware performance counter represents a load that is exerted on the computer that is implementing the method of configuring the neural network, it is made possible to readily adapt the topology if, during configuring, the load exerted on the computer would threaten to become too large.

In an embodiment, the set of hyperparameters of said neuron group includes at least one of: a number of source connections representing inputs to said neuron group; a number of sink connections representing outputs from said neuron group; and a learning rate of said neuron group.

In this manner, the set of hyperparameters comprises at least several very effective hyperparameters.

In some embodiments, hyperparameters associated with respective neuron groups of the neural network may be initialized randomly (i.e. random values may be chosen as their values, using a suitable random generator). In other embodiments, such hyperparameters may be initialized according to a pre-defined template (i.e. each hyperparameter is set to a pre-determined value according to a pre-existing scheme). In yet other embodiments, such hyperparameters may be initialized according to a hybrid approach, wherein e.g. some values are chosen randomly but others are set according to a pre-defined template.

While it is in principle possible to initialize every set of hyperparameters associated with every neuron group with identical values, it is preferred to initialize all sets of hyperparameters using random, and therefore in practice different and distinct, values.

In an embodiment, the step of iteratively adapting the topology of the neural network based on the plurality of neuron group objective functions using the method of genetic optimization comprises:

- evaluating the plurality of neuron group objective functions corresponding with the plurality of neuron groups;
- selecting at least one neuron group, preferably at least two neuron groups, of the plurality of neuron groups as parent or parents, based on the evaluating;
- recombining respective features of the selected parent or parents to generate a new neuron group;
- optionally mutating at least one feature of the new neuron group; and
- adding the new neuron group to the neural network.

In this manner, evaluation of the plurality of neuron group objective functions corresponding with the plurality of neuron groups can be performed in parallel, thus reducing the overall time duration of the evaluation. Furthermore, by recombining respective features of the selected parent or parents and by optionally mutating at least one feature of the new neuron group, it is possible to generate one or more new neuron groups efficiently whilst maintaining a high probability that the newly generated neuron group or groups are fit for purpose, i.e. contribute to the overall accuracy of the neural network in a resource-efficient manner. Adding the one or more new neuron groups to the neural network obviously adapts the topology of the neural network.

In an embodiment, the step of adapting the topology of the neural network comprises:

- removing at least one neuron group of the plurality of neuron groups from the neural network, if the neuron group objective function of the at least one neuron group to be removed meets a deletion criterion.

In this manner, ineffective, counter-productive or insufficiently effective neuron groups can be removed in an efficient manner.

In an embodiment, the step of adapting the topology of the neural network comprises maintaining an upper limit to the number of neuron groups subject to being changed in the step of adapting the topology.

In this manner, by not adapting too great a part of the topology at once, the overall stability of the neural network can be safeguarded against violent swings in performance, in particular during ongoing operation, in other words when sufficient stability has been reached after a startup phase of the configuring, in which startup phase it may be preferred to allow such drastic adaptations of the topology in order to accelerate initial configuring.

In an embodiment, at least one neuron group of the plurality of neuron groups comprises at least two neurons. It is preferred that a majority of the neuron groups of the plurality of neuron groups comprises at least two neurons.

In this manner, calculations relating to the neural network may be executed more efficiently, owing to the higher efficiency of calculating block sparsity than full sparsity on parallelized hardware.

In an embodiment, the neural network is of such a scale as to require a Kolmogorov complexity of at least 10 megabytes. The Kolmogorov complexity of a neural network is defined as the size of a shortest computer program (in a predetermined programming language) that produces the neural network as output. In practical terms, a Kolmogorov complexity of at least 100 kilobytes currently corresponds with a neural network having 1 million connections. In a particular embodiment, the neural network is of such a scale as to require a Kolmogorov complexity of at least 100 kilobytes excluding connection weights of the neural network.

In an embodiment, the step of training comprises using a method of backpropagation through time.

In this manner, the method is capable of handling (at least partially) cyclical topologies of neural networks. As cyclical topologies may improve performance of the neural network, in this manner the method's overall performance may be improved.

In an embodiment, the latency constraint is an implicit consequence of an explicit throughput constraint imposed on the neural network.

Note that it is instead also possible to formulate an explicit latency constraint, but that it may be preferred, depending on practical circumstances, to derive the latency constraint from an overall throughput constraint imposed on the neural network.

In a second aspect of the present invention, there is provided a computer-implemented method of using a neural network configured using the method of any previous embodiment for inference.

It will be understood that the above-described considerations and advantages applying to embodiments of the method for configuring a neural network may also apply, mutatis mutandis, to embodiments of the method of using a neural network configured using such a configuring method, for inference.

In a third aspect of the present invention, there is provided a computer program comprising computer-executable instructions configured for, when executed by a computer, causing the computer to perform the steps of the method of any one of the previous embodiments.

In a fourth aspect of the present invention, there is provided a computer program product comprising a computer-readable medium having stored thereon the computer program of the above-described embodiment.

In a fifth aspect of the present invention, there is provided a data processing system for configuring a neural network, comprising means for carrying out the steps of any one of the above-described embodiments of the method for configuring a neural network.

In a sixth aspect of the present invention, there is provided a data processing system for using a neural network for inference, comprising means for carrying out the steps of the above-described embodiment of the method of using a configured neural network.

It will be understood that the above-described considerations and advantages applying to embodiments of the method for configuring a neural network may also apply, mutatis mutandis, to embodiments of the computer program, embodiments of the computer program product, embodiments of the data processing system for configuring a neural network, and embodiments of the data processing system for using a neural network for inference.

BRIEF DESCRIPTION OF THE DRAWINGS

The above-described embodiments represent currently preferred embodiments of the present invention, whose scope is solely determined by the appended claims. Other features, aspects, and advantages of the subject matter will become apparent from the description and the drawings, in which:

Figure 1 schematically illustrates an example of a neural network for use by the method according to the present invention;

Figure 2A schematically illustrates an example of a neural network wherein a neuron group is replaced in the context of a neuron group objective function;

Figure 2B schematically illustrates the steps of an experiment procedure in order to quantitatively determine whether a given function can be considered a neuron group objective function;

Figure 2C schematically illustrates an example neural network in the context of determining a neuron group objective function;

Figure 3 schematically illustrates an example of a recombination strategy;

Figure 4 schematically illustrates the tradeoff between many and few hyperparameters on the one hand and between a programmable and a configurable approach on the other hand;

Figure 5 schematically illustrates the tradeoff between high and low hyperparameter entropy on the one hand and engineering effort on the other hand;

Figure 6 schematically illustrates how the method of genetic optimization can be tuned to obtain certain desirable profiling results;

Figure 7 schematically shows that the recombination strategy and the removal strategy rely on the neuron group objective functions of respective neuron groups;

Figure 8 schematically illustrates operation of a method according to the present invention, wherein the method of genetic optimization functions as a feedback system to perform load balancing;

Figures 9A-C schematically illustrate how latency rises with increased occupations of particular resources;

Figure 10 plots the mean square error (y-axis) to the number of iterations (x-axis) for several experiments in order to demonstrate the impact of the method of genetic optimization on optimizing configurations of neural networks;

Figure 11 schematically illustrates a further development of Figure 8, with the inclusion of PID controllers for each of the resources and

Figure 12 schematically illustrates an embodiment of a computer-implemented method M1 for configuring a neural network.

DETAILED DESCRIPTION

Some known conventional approaches relate to neural networks.

- Transformers are arguably today's most capable neural network architectures. They create complex, optimized configurations in terms of connection weights, but not in terms of hyperparameters.
- NEAT/ HyperNEAT optimizes many neuron groups, but all neuron groups in the neural network share the same hyperparameters and the objective function is considered on neural network level instead of neuron group level. Therefore, the number of hyperparameters to be tuned is limited to a few dozen of optimized hyperparameters.
- DARTS: Differentiable Architecture Search (https://arxiv.org/pdf/1806.09055.pdf) is a method that arguably obtains a very high degree of complex, optimized configuration. However, the considered solution space is still far too limited to represent a whole knowledge base.
- There exist several works on genetically evolving neural networks with objective functions on the neural network level. These works optimize at most only a few dozen of hyperparameters.

In the following, a select number of preferred embodiments will be described. Of course, the skilled person will understand that particular features of certain embodiments may be combined with other embodiments, and that the described embodiments may be further developed within the scope of the present invention, which is defined solely by the independent claims.

For the convenience of the reader, a select number of terms will be defined below. Nevertheless, it is to be understood that some of these terms may be defined using other words.

DEFINITIONS

Configurable machine learning framework: a machine learning framework that allows to configure (instead of program, which is typically the case) the hyperparameters on neuron group level. The configurable machine learning framework ensures that neuron groups can be created with any phenotype without breaking the neural network.

Example: if the learning rate would be considered as a hyperparameter on neuron group level, each neuron group will learn with its own learning rate.

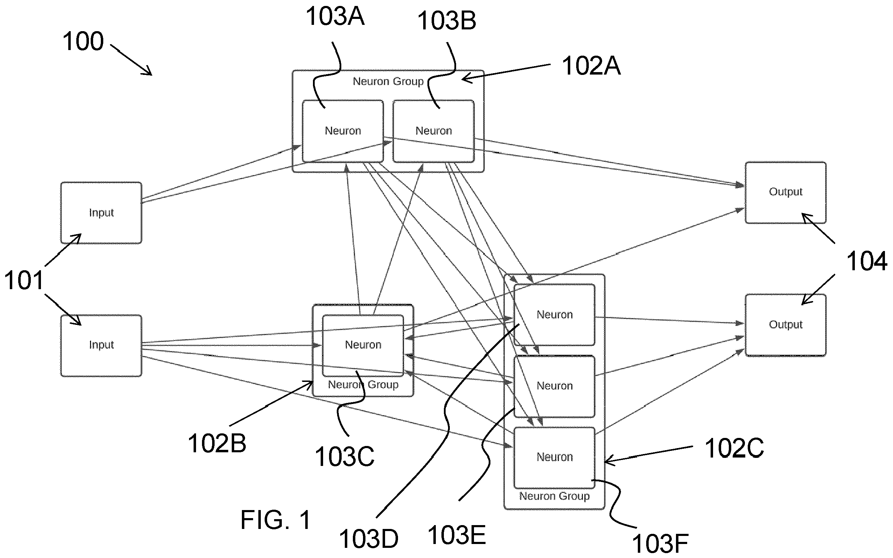

For maximal freedom in terms of neural network topology, the user may want to use a method like backpropagation through time, so it can be allowed that each neuron group can be connected with any other neuron group, as illustrated in Figure 1.

Figure 1 schematically illustrates an example of a neural network 100 for use by the method according to the present invention. The neural network 100 comprises input 101 and output 104 neurons, as well as (in this example) six internal neurons 103A-F associated with three separate neuron groups 102A-C. The figure also shows arrows between the neurons 101, 103A-F and 104. The shown arrows represent flow of data through the neural network 100. Note that the input neurons 101 only have data flow away from them, whereas the output neurons 104 only have data flow into them.

Configuration: the collection of all hyperparameters of one neural network.

Complex configuration: a configuration with Kolmogorov complexity higher than 10 MB, connection weights excluded.

Optimized configuration: any configuration that yields a strictly better neural network objective function outcome after configuring than the neural network objective function outcome after configuring with a random configuration of similar computational workload.

Hyperparameters: all parameters used by a neuron group or neural network, connection weights excluded. Hyperparameters may include learning rate, number of source connections, number of sink connections, connectivity strategy, neuron group frequency, meta-parameters concerning the method of genetic optimization itself, etc.

Phenotype: all hyperparameters of a neuron group optimized by the method of genetic optimization.

Input: an input node of a neural network.

Neuron: a node in a neural network that includes (1) one or more input signals and (2) one or more output signals, which are calculated by a function that may depend on the input signals.

Neural network: a network that includes inputs, neurons, outputs and connections between its nodes.

Neural network objective function: a function to be optimized by the neural network. For example, predicting the respective class of a set of images with mean square error as low as possible.

Hardware performance counter: any value that is stored in specific hardware registers or specific memory allocated for profiling. Hardware performance counters may include (non-exhaustive list):

- Unhalted Core Cycles

- Unhalted Reference Cycles
- Instructions Retired
- LLC (Last Level Cache) reference
- LLC Misses
- Timestep counter
- Branch Instruction Retired
- Branch Misses Retired
- Used bandwidth on any bus
- Occupied RAM (Random Access Memory) memory
- Occupied L1 cache
- Occupied L2 cache
- Number of X87 uops executed
- Number of SSE double precision FP packed uops executed
- Number of SSE single precision FP scalar uops executed
- Number of SSE single precision FP packed uops executed
- Number of SSE double precision FP scalar uops executed

Note that uops is identical to μops or micro-ops, i.e. detailed low-level instructions used in some computer processing designs to implement complex machine instructions that are termed macro-instructions in this context.

In this context, SSE stands for Streaming SIMD (Single Instruction, Multiple Data) Extensions, an instruction set extension to the x86 architecture.

The skilled person will appreciate that the specific examples of hardware performance counters given above only serve as illustrative examples in the context of specific machine architectures, and are not intended to be interpreted as limiting to embodiments according to the present invention. In particular, other suitable hardware performance counters may additionally or alternatively be used, depending on the machine architecture that is chosen to execute the method. In the unlikely event that no hardware performance counters were to be pre-defined for a specifically chosen machine architecture, the skilled person will understand that similar hardware performance counters to the ones presented above may be defined and implemented specifically for the embodiments according to the present invention.

Profiling measurements: one or more scalars representing information of measured computational workload, memory workload and/or communication workload by reading hardware performance counters.

Neuron group objective function: a function that defines the contribution of a neuron group to the neural network objective function. In this context, a contribution should at least include the following two parts:

- A positive contribution of the neuron group towards the neural network objective function, called an accuracy contribution; and
- A negative contribution in the form of opportunity cost due to limited computational power, memory and/or bus capacity, called a resource occupation.

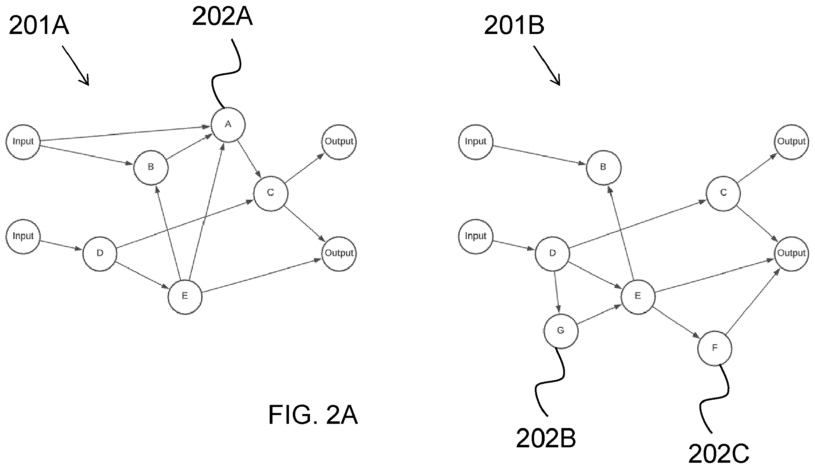

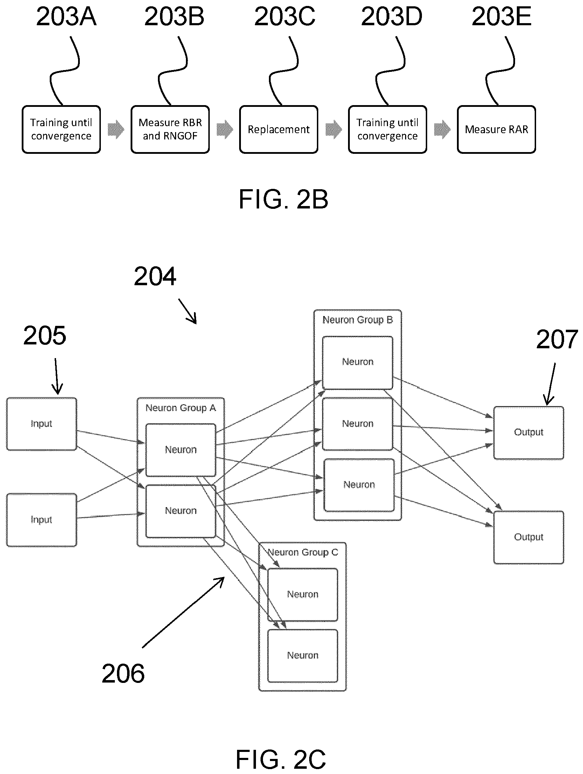

Referring to Figures 2A, 2B and 2C, it can be checked quantitatively with the following experimental set-up if a given function can be considered as a neuron group objective function. Consider the act of replacing (i.e. a replacement of) one neuron group with one or more neuron groups causing an equivalent workload on the computer and with a randomly chosen phenotype. An example replacement, where neuron group A is replaced by neuron groups G and F, is shown in Figure 2A. In the left part of the figure, a neural network 201A is shown comprising neuron groups A (202A), B, C, D, and E between the input and the output of the neural network. In the right part of the figure, the same neural network 201B is shown after the replacement of neuron group A 202A (which has been deleted) with neuron groups G 202B and F 202C (which have been added and for which connections have also been added to some of the existing neuron groups). As can be seen from the figure, the added neuron group or neuron groups 202B, 202C need not be at the same network position as was/were the deleted neuron group 202A or neuron groups.

The term result before replacement (RBR) may refer to the outcome of the neural network objective function before replacement, and the term result after replacement (RAR) may refer to the outcome of the neural network objective function after replacement. The term result neuron group objective function (RNGOF) may refer to the outcome of the neuron group objective function for the considered neuron group to be replaced.

Figure 2B schematically illustrates the steps of an experiment procedure in order to quantitatively determine whether a given function can be considered a neuron group objective function. As the figure shows, the experiment comprises in a first step 203A training the neural network under consideration until convergence, in a second step 203B measuring the RBR and RNGOF of the considered neuron group to be replaced, in a third step 203C replacing that neuron group, in a fourth step 203D again training the neural network under consideration until convergence, and in a fifth step 203E measuring RAR.

If this experiment is repeated for all neuron groups in a neural network, vectors of respectively corresponding RNGOF, RBR and RAR values are obtained, denoted as v_RNGOF, v_RBR and v_RAR respectively. The neuron group objective function is any function that obtains a correlation between v_RNGOF, v_RBR and v_RAR with absolute value higher than 0.01, or expressed symbolically: Correlation(v_RNGOF, v_RBR - v_RAR) > 0.01

An example of an objective function could include considering the sum of all sink connection weights of a neuron group, since this indicates how much the neuron group influences all nodes using the output signal(s) of the considered neuron group. The objective function could also include negative contributions to the neural network's accuracy, for instance by subtracting a cost for the computational power the neuron group consumes. This computational power is an opportunity cost because other neuron groups could have existed if the considered neuron group did not exist.

In order to better explain this, Figure 2C schematically shows an example neural network 204 for which this will be done. The neural network comprises, besides its two input 205 and two output 207 neurons, three neuron groups 206 A, B and C. The figure shows arrows representing data connections between the neurons. Every data connection is characterized by its source neuron, its sink neuron and its connection weight. Assume that a backpropagation method (or any alternative method, including genetic methods such as NeurEvolution, Hebbian Learning, etc.) is used to train the connection weights of the neural network 204 of Figure 2C. Assume for the sake of simplicity that all weights converged to 1. In that case, the positive impact of neuron groups A, B and C are 10, 6 and 0 respectively. The negative impact could be approximated by considering the number of source connections of the neuron group which would be 4, 6 and 4 respectively. For this example objective function, the result would be 6, 0 and -4 for neuron groups A, B and C respectively.

Now the definitions will be continued.

Output: an output node of a neural network.

Node: one element producing a signal that can be read in or from a neural network, neurons, inputs and outputs are nodes.

Source connection: a connection at the input side of a node.

Sink connection: a connection at the output side of a node.

Neuron group: a group of one or more neurons that share one set of hyperparameters as described by the phenotype.

Method of genetic optimization: a method that defines a recombination strategy and a removal strategy for each topology update. Note that other approaches may be considered for removing and adding neuron groups when updating the topology (e.g. random choice or another type of heuristic), but genetic optimization is at present preferred because of efficiency and efficacy.

Recombination strategy: a method of defining the phenotype for a new neuron group based on one or more existing neuron groups' phenotypes. An example recombination strategy could be: (1) Randomly select at least one, preferably at least two neuron groups with high values for the neuron group objective function. (2) Randomly select a hyperparameter value from the parent(s) for each hyperparameter type. (3) Randomly select a number of hyperparameters of the new neuron group and apply a mutation on the considered hyperparameter.

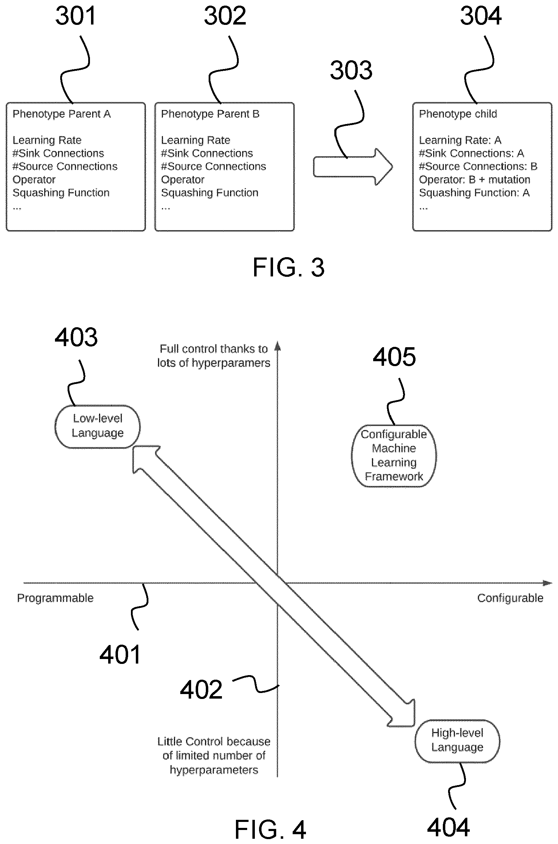

Figure 3 schematically illustrates an example of such a recombination strategy, wherein a phenotype parent A 301 and a phenotype parent B 302 are recombined 303 to produce a phenotype child 304, by selecting particular hyperparameter values from either one of the parents 301, 302, and optionally mutating. In this example, the number of source connections hyperparameter value is selected from phenotype parent B 302 and the operator hyperparameter value of phenotype parent B 302 is selected and is mutated, whereas the other hyperparameter values are selected from phenotype parent A 301. In this manner, a new neuron group 304 can be produced 303 incorporating some of the characteristics of its parent and optionally featuring some unique mutations.

Of course, Figure 3 represents just one possible example, wherein two parents 301, 302 were selected. It is alternatively possible to select only one parent, in which case mutation serves to produce a new child; or alternatively three or more parents, in which case particular hyperparameter values may be selected from one (or, logically speaking, if the hyperparameter values are shared by several parents, from more) of the parents.

Removal strategy: a method defining when a neuron group should be removed from the neural network. Example: if the objective function of a neuron group drops below zero, the neuron group is removed from the neural network.

Topology update: The topology update, e.g. using a method of genetic optimization, and the method that is used for training the connection weights (for instance a standard backpropagation method), can run in sequence or in parallel. A topology update is the act of removing a number of neuron groups and/or adding a number of neuron groups with their respective hyperparameters, e.g. as a result of the method of genetic optimization.

With the help of the definitions presented above, in the following description, the present invention will be described in more detail, with the help of some exemplary embodiments. Of course, these exemplary embodiments are not intended to be construed in a limiting manner. The scope of the present invention is defined solely by the appended claims. The exemplary embodiments presented below are intended to serve as a more detailed explanation of particular concepts, features and advantages relating to the present invention.

The following paradigm is introduced, in order to better explain a preferred embodiment according to the present invention:

- Consider a configurable machine learning framework 405, as defined above.
- Consider a method of genetic optimization configured for optimizing phenotypes of different neuron groups in the configurable machine learning framework. This method of genetic optimization is configured to use a recombination strategy, a removal strategy and an objective function, as defined above.

This paradigm introduces a bottom-up approach for optimizing neural networks for general AI applications. The paradigm differs from the traditional top-down approach in the machine learning field at least in the following ways:

- Typical machine learning frameworks make a trade-off between programming complexity 401 and degree of control 402 over the network, as shown in Figure 4. R&D departments will typically use low-level languages 403 for full control over the neural network, so new kinds of architectures can be designed. The most capable neural network architectures are implemented as optional architectures in the high-level languages 404. Businesses will typically use high-level languages 404 with proven neural network architectures to achieve good results, while focusing foremost on the application-specific engineering. Embodiments according to the present invention differ from low-level machine learning languages 403 at least in the sense that the control 401 is given through configuration (the right half of the axis 401) instead of programming (the left half of the axis 401). At least some embodiments according to the present invention differ from high-level machine learning languages 404 at least in the sense that they may give significantly more detailed configuration options 402 than usual, namely on a neuron group level instead of neural network level. An example of such a significantly more detailed configuration option is that at least some embodiments according to the present invention may allow to set multiple learning rates within a single layer of a neural network, and thus multiple learning rates for different neurons within that layer of the neural network, which is impossible using conventional frameworks.

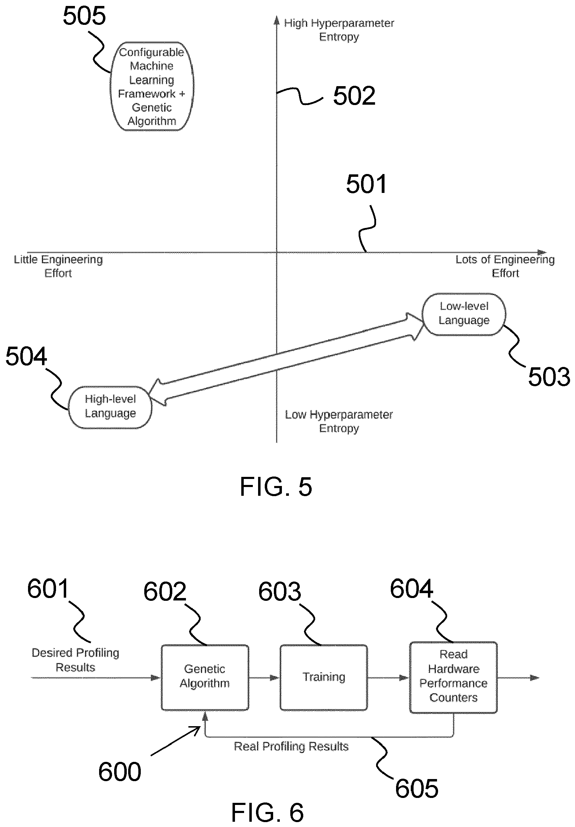

- Whereas low-level languages 503 allow the user to set hyperparameters in a very detailed manner, the user typically doesn't do that because it is a complex problem to optimize hyperparameters (represented by the right half of axis 501, which indicates great engineering effort, as opposed to the left half of axis 501, which indicates little or manageable engineering effort). In practice, neural architecture search focuses on optimizing hyperparameters on neural network level. The number of parameters to optimize on neural network level is typically restricted to a few dozen hyperparameters, as indicated in Figure 5 in that the high-level languages are situates at the bottom half of axis 502, which represents low hyperparameter entropy, as opposed to the top half of axis 502, which represents high hyperparameter entropy. At least some embodiments 505 according to the present invention strive to optimize millions of hyperparameters, since the method of genetic optimization optimizes dozens of hyperparameters for at least thousands of neuron groups in a neural network. As such, the hyperparameter Kolmogorov complexity of neural networks of these embodiments 505 according to the present invention is at least three orders of magnitude higher than state-of-the-art hyperparameter Kolmogorov complexity.

Figure 6 schematically illustrates how the method 602 of genetic optimization can be tuned to obtain certain profiling results. The figure shows how desired profiling results 601 are input to the method 602 of genetic optimization, how the neural network is trained 603 (until convergence), and how (both during and after) training 603, the hardware performance counters may be read 604 in order to produce real profiling results 605, which may be fed back 600 to the method 602 of genetic optimization. In this manner, the method 602 of genetic optimization may function as a feedback system 600 in order to meet a latency constraint defined for the neural network, wherein the latency constraint takes into account hardware performance of the computer implementing the method, e.g. by being dependent on processing speed, memory space and/or communication bandwidth of the computer.

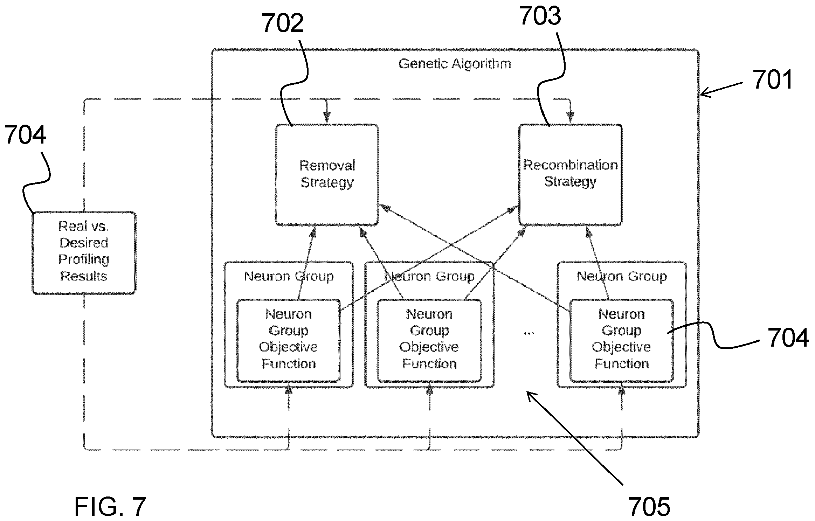

Figure 7 schematically shows that, in the context of the method 701 of genetic optimization, the recombination strategy 703 and the removal strategy 702 rely on the neuron group objective functions 704 of respective neuron groups 705. The neuron group objective function 704 and/or the recombination decision making process 703 and/or the removal decision making process 702 may advantageously depend on both the desired and real profiling results 704 of Figure 6.

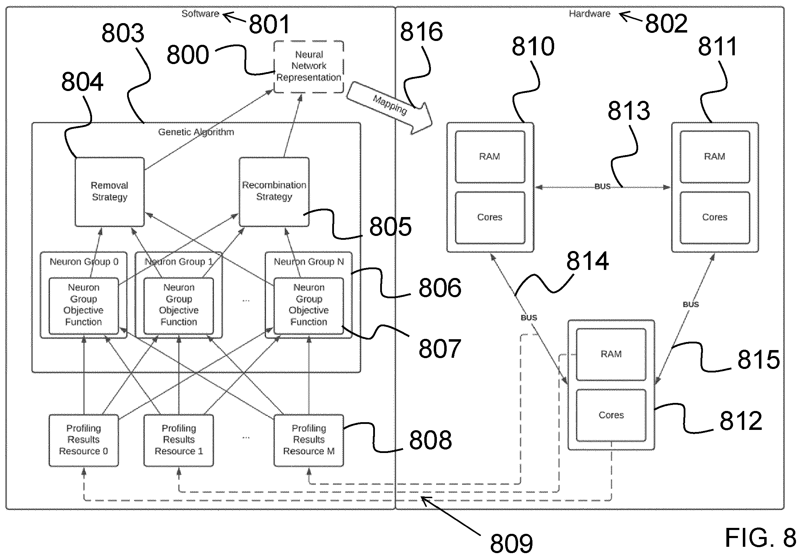

Figure 8 schematically illustrates operation of a method according to the present invention, wherein the method of genetic optimization functions as a feedback system to perform load balancing.

Figure 8 depicts the following cycle (bullet points explain depicted parts clockwise, starting with the neural network representation):

- The computer software system 801 performing the method has a representation of a neural network 800. This neural network 800 is mapped 816 onto a hardware system 802 that includes at least one core 810, 811, 812, one memory 810, 811, 812 (indicated in the figure as RAM) and zero or more bus systems 813, 814, 815. Cores, memories and bus systems may be considered to be resources.

- The hardware 802 in the example consists of three units 810, 811, 812 that each include one core and one RAM block. Of course, in other examples, there may be fewer or more units, and additionally or alternatively each unit may include more cores and/or more RAM blocks. Moreover, each unit need not necessarily include the same internal components. Furthermore, it is fully connected via three bus systems 813, 814, 815. Each one of them may be considered as a resource, so there are 9 resources in the given hardware system 802.
- We measure the load of each of these resources via hardware performance counters (load_0, load_1 and load_2). This information is forwarded 809 to the respective neuron group objective functions 807 of the neuron groups 806, (in this example indirectly via logical distributors 808 that represent and distribute the different hardware performance counters to every consuming neuron group objective function 807, but of course the hardware performance counters may be provided to the neuron group objective functions 807 directly), to calculate the opportunity cost of having a neuron group. The opportunity cost represents an estimate of the amount of computational resources that could have been used for other neuron groups.
- Each neuron group's 806 neuron group objective function 807 is calculated, taking into account the hardware performance counters.
- The neuron group objective functions 807 serve the decision making process of the removal strategy 804 and/or the recombination strategy 805. In the figure, the method 803 of genetic optimization may be referred to as a "Genetic Algorithm" for convenience, but of course the method 803 of genetic optimization is computer-implemented and therefore extends beyond a pure algorithm as such.

Consider the following observations:

- Different types of neural network architectures work better for different datasets (e.g. LSTMs work better for time series than for image processing).
- Different types of hardware have different ratios of resources: e.g., a GPU has typically 100x more computational power than a CPU, but only 5x more bandwidth.
- Different types of neural network architectures use different kinds of hardware resources (convolutions with high batch size are rather compute bound, whereas fully connected layers with low batch size are more bandwidth bound).

Considering these observations together, neural network architecture design depends on (a) the data and (b) the considered hardware.

Experimental set-up 3 shows that the method of genetic optimization can optimize the neural network topology within a given computational constraint: it improves the loss from 0.063 to 0.053 for the same computational resources. Note that only one resource was considered, so this is not a proof of concept for load balancing, but it proves that the method of genetic optimization can be used to optimize a neural network architecture within a certain computational boundary.

Load balancing becomes more important for bigger neural networks. Big neural networks gain in importance as was shown by Tom Henighan et al. in "Scaling Laws for Autoregressive Generative Modeling" (https://arxiv.org/abs/2010.14701): Neural network size matters to obtain the best results for the neural network objective function.

Since both the size and the architecture itself matter, it is important to maximize the hardware utilization while optimizing the efficiency of the architecture itself. The following enumeration of cases shows the problem of load balancing. Note that this is a non-exhaustive list, since it would at least require a four-dimensional figure to capture the most important dependencies to describe the space for which the problem statement is valid. Similar figures may also be considered with throughput on the y-axis instead of latency.

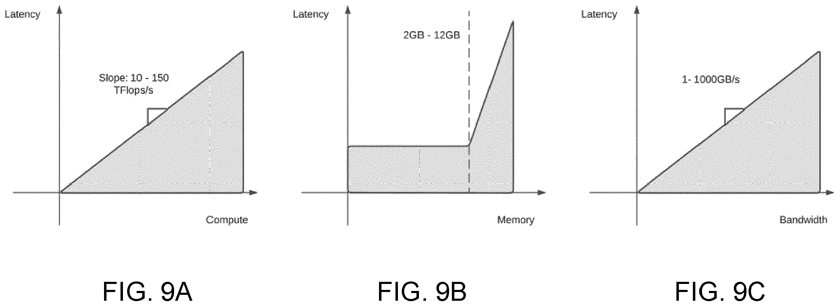

- Figure 9A illustrates how latency rises with computational workload ("compute"). Given a certain latency constraint, the computational workload needs to be below a maximum number of flops/s. Depending on the chosen hardware, this may be in the order of magnitude of 50 TFlops/s.
- Figure 9B illustrates how latency rises with memory usage. Given a certain latency constraint, the neural network needs to fit onto the memory (unless techniques are implemented to circumvent issues of limited GPU RAM for instance, but this may result in significant impact on latency). Depending on the chosen hardware, this may be in the order of magnitude of 6 GB of memory.
- Figure 9C illustrates how latency rises with bandwidth. Given a certain latency constraint, the communication between the core(s) and memory must not exceed the bandwidth of the bus. Depending on the chosen hardware, this may be in the order of magnitude of 1 to 1000 GB/s for typical single-GPU systems. Of course, for more advanced computer systems, such as supercomputers, the bandwidth of the bus may be (much) higher.

As soon as one or more constraints are hard to comply with, load balancing becomes a difficult problem to solve. At least some embodiments according to the present invention tackle this problem by shifting neuron groups to the most efficient configurations taking into account both the contribution to the neural network objective function and the hardware resource availability, by basing the neural network objective function on an accuracy contribution and a resource occupation, wherein the accuracy contribution and the resource occupation are due to the corresponding respective neuron group being included in the neural network.

EXPERIMENTAL SETUP 1

Embodiments according to the present invention aim to allow effective configuring of large-scale neural networks.

Consider hypothetically the question whether very big neural networks consisting of neuron groups with randomly chosen hyperparameters may yield the same quality of results. If this would be true, it could be argued that at least some embodiments according to the present invention would merely be a runtime optimization and not a necessary stepping stone towards more generic artificial intelligence, as set out in the introduction.

However, it can be shown with a simple experimental setup that the addition of unnecessary connections negatively affects the accuracy of a neural network.

Experiment 1: we consider the Cifar10 dataset and a convolutional neural network with the following layers:

- Hidden layer 1: convolutional with 1 filter, stride 1, padding 1 and 5x5 kernel
- Hidden layer 2: convolutional with 1 filter, stride 1, padding 1 and 5x5 kernel
- Fully connected layer of 128 perceptrons

To ensure a fair comparison with the second experiment, weight sharing is turned off. The resulting accuracy of the test set of this network is found to be 53%.

Experiment 2: we consider the same dataset and all neurons as defined in Experiment 1, but instead of just having a kernel as input, each neuron connects to all neurons of the layer before. As such, the neural network of experiment 1 is a subset of the neural network of experiment 2.

The resulting accuracy of the test set of this second network is found to be 45%.

Despite the fact that the neural network from experiment 1 is a subset from the neural network from experiment 2, the accuracy of the first neural network is significantly better. This shows that achieving a complex configuration alone (for instance the brute force approach of using a gigantic neural network with a random complex configuration) is not sufficient to obtain good results: an optimized configuration is necessary to support more generic artificial intelligence.

EXPERIMENTAL SETUP 2

Experiment 1: we consider a simple multi-layer perceptron architecture to solve MNIST. This architecture consists of two fully connected hidden layers of 18 Neurons each. The mean square error loss can be found to converge towards 0.06. This approach can be termed "static", because the neuron topology is not changed.

Experiment 2: we consider a neural network that runs the method of genetic optimization (with one neuron per neuron group) in parallel with a standard backpropagation method. The phenotype only comprises the desired number of source connections to be made per neuron group. This experiment is allowed to make the same total number of connections as the first experiment, so the runtime comparison is fair if a sparse neural network engine is used. For the same runtime budget, the mean square error loss can be found to converge towards 0.05. This approach can be termed "evolved", because the method of genetic optimization evolves the neuron groups and their topology is changed.

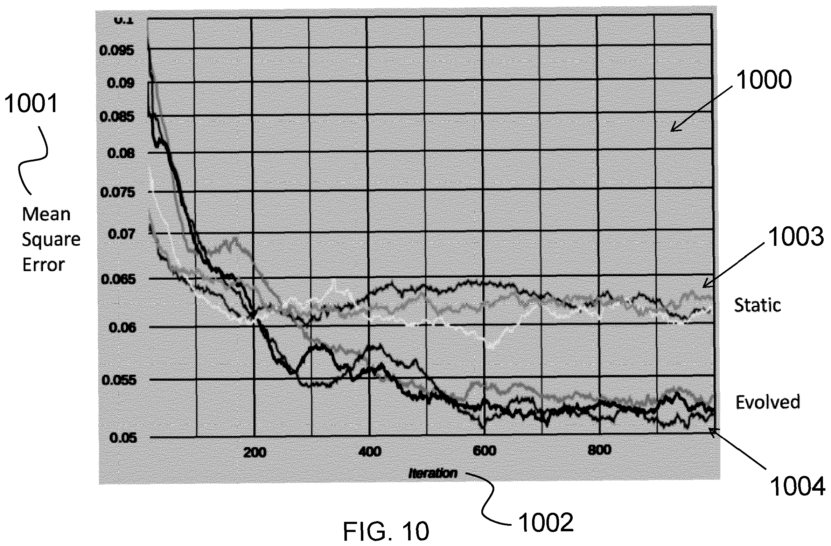

Experiment 1 and 2 are repeated three times with different random seeds, in order to improve accuracy and reliability of the experimental setup. The results are represented in the graph of Figure 10 which plots 1000 the mean square error 1001 (y-axis) to the number of iterations 1002 (x-axis) for both experiment 1 (indicated with the reference "Static") and experiment 2 (indicated with the reference "Evolved"). The graph 1000 shows that the static approach converges to a mean square error loss of around 0.060-0.065 (1003), whereas the evolved approach converges to a mean square error loss of around 0.050-0.055 (1004). This shows that at least some embodiments according to the present invention may lead to optimized configurations.

In the following, a preferred embodiment according to the present invention will be described with reference to pseudo-code.

Consider the following neuron group objective function:

$$Loss_n = -\sum_i^{sinks} w_i + \sum_j^{resources} c_j * f_n(j)$$

With:

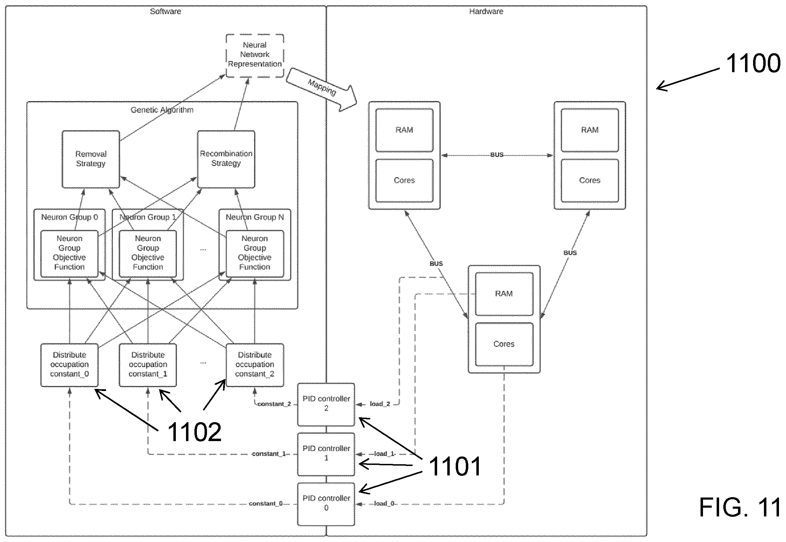

- $Loss_n$ the neuron group objective function to be minimized for neuron group n
- $w_i$ connection weight of connection i
- $c_j$ occupationConstant of resource j; the occupationConstant represents the opportunity cost of using the considered resource. The opportunity cost depends on both the desired profiling results and the real profiling results (this general case is depicted in Figure 8). For instance, when the desired load of the resource is 90% and the resource is used for only 50% during one iteration of training under the given latency constraint, the opportunity cost will be low. On the other hand, if the resource is used for 99%, the opportunity cost will be high. It may be preferred in some embodiments to use PID controllers to convert desired and real profiling results into occupationConstants. An example of such a preferred embodiment is illustrated in Figure 11.
- $f_n(j)$ the load caused on resource j by neuron group n

Figure 11 schematically illustrates a further development 1100 of Figure 8, with the inclusion of PID controllers 1101 for each of the resources. The explanation given above of Figure 8 applies as well to Figure 11, mutatis mutandis. In particular, Figure 11 shows that the hardware performance counters (load_0, load_1 and load_2) are provided to respective PID controllers 1101 (respectively PID controller 0, PID controller 1 and PID controller 2). In this example, the controllers 1101 are PID controllers, but other suitable types of controllers may also be considered. Compared to Figure 8, in this further development, the neuron group objective functions of the neuron groups do not receive the hardware performance counters directly via the set of logical distributors ("Profiling Results Resource 0-M" in Figure 8). Rather, the PID controllers output a suitable constant (constant_0, constant_1 and constant_2) to a different set of logical distributors 1102 ("Distribute occupation constant_0-2" in Figure 9). After this difference, the example of Figure 11 continues in the same way as the example of Figure 8. The advantage of this indirection via a set of intermediate controllers 1101 between the actual resource and their corresponding logical distributors 1102 is that relative weights of the resources as well as evolution over time of the respective resources may be taken into consideration, in order to improve the method of configuring the neural network.

CODE LISTING 1

While (true):

```
// Traditional training scheme
    For trainingIteration in range(0, trainingIterations):
        calculateActivations()
         updateWeights() // e.g. using backpropagation through time
    // Run PID Controllers
    For each resource:
        occupationConstant = runPidController(loadi)
    // Calculate Objective function
    For each NeuronGroup:
        calculateObjectiveFunction(occupationConstants)
    // Removal Strategy
    For each NeuronGroup:
        if (NeuronGroup.ObjectiveFunctionScore < 0)
            remove NeuronGroup
    // Recombination Strategy
    For recombinationIteration in range(0, recombinationIterations):
        listNeuronGroups = select10RandomNeuronGroups()
        listNeuronGroups.sortOnObjectiveFunctionScore()
        phenotype = createPhenotype(listNeuronGroups[0].phenotype,
        listNeuronGroups[1].phenotype)
        createNewNeuronGroup(phenotype)
    // Connection Algorithm
    removeAllConnectionsBelowThreshold(threshold)
    for each NeuronGroup:
```

```
while
(NeuronGroup.numConnections < NeuronGroup.targetNumConnections):
        makeNewConnection(selectRandomNeuronGroup())
```

The above code listing 1 represents an example method implementing an embodiment according to the present invention, described in a generally understood pseudo-language based on Python.

It can be seen that, in addition to a traditional training scheme of training a neural network, this preferred embodiment further comprises the following elements:

- A step wherein for each resource the occupation is determined;
- A step wherein for each neuron group the neuron group objective function is determined (based on the occupied resources of the neuron group); and
- Steps of removing neuron groups, recombining suitable neuron groups into new neuron groups, and adapting the topology by removing undesired connections and connecting the new neuron groups. all based on the neuron group objective functions.

In this sense, this preferred embodiment allows to configure the neural network.

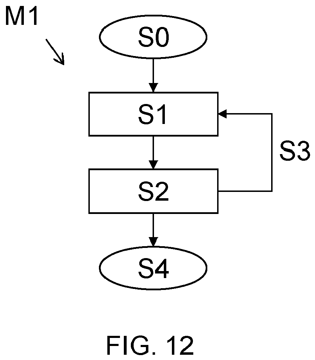

Figure 12 schematically illustrates an embodiment of a computer-implemented method for configuring a neural network, in order to optimize at least one objective function of the neural network according to a latency constraint defined for the neural network, the latency constraint representing a maximum time duration from input to the neural network up to output from the neural network and taking into account hardware performance of the computer implementing the method;

wherein the neural network has a topology comprising a plurality of neuron groups, each neuron group of the plurality of neuron groups comprising at least one neuron and having a respective set of hyperparameters associated with said neuron group;
wherein the at least one objective function comprises:

- a neural network objective function, implicit here in the function updateWeights(), corresponding with the neural network, wherein the neural network objective function is configured for optimizing an output of the neural network; and
- a plurality of neuron group objective functions, denoted here as NeuronGroup.ObjectiveFunctionScore, corresponding respectively to the plurality of neuron groups of the neural network, wherein each neuron group objective function is based on an accuracy contribution and a resource occupation, wherein the accuracy contribution and the resource occupation are due to the corresponding respective neuron group being included in the neural network;

wherein the method comprises:

- iteratively training S1 the neural network by optimizing weights of the neurons of the neural network, based on the neural network objective function; and
- iteratively adapting S2 the topology of the neural network based on the plurality of neuron group objective functions, preferably using a method of genetic optimization, indicated here by the steps of removing neuron groups, recombining suitable neuron groups into new neuron groups, and adapting the topology by removing undesired connections and connecting the new neuron groups.

In the figure, step S0 represents the start of method M1. Figure 12 also shows the iterative execution in step S3, where method M1 returns to execute step S1 after executing step S2, unless some halting criterion is reached to halt S4 the method.

Referring to both the code listing 1 and Figure 12, the iterative training S1 of the neural network is indicated in the code listing 1 by the iterations in the for-loop of the traditional training scheme. A similar approach may be used for the iterative adapting of the topology of the neural network.

TECHNOLOGY STACK

Embodiments according to the present invention may preferably be implemented on parallelized hardware that allows sufficient flexibility for dynamic behavior. Asics and FPGAs may not be flexible enough for dynamic behavior, and CPUs are not parallelized.

GPU or multi-GPU systems may be suitable for implementing embodiments according to the present invention, or also the CS-2 Cerebras system or the IPUs from GraphCore may be suitable, if they allow dynamic modifications in neural network topology without long recompilation time. Experiments indicate that Cerebras is suitable.

The runtime bottleneck of the code is evaluating the objective function of the different neuron groups, since this depends on training the respective connection weights. The training of the weights should therefore be optimized with a hardware-specific low-level language. In the case of GPUs this can for example be OpenCL, Cuda or Triton.

For the sake of fast development, all non-critical code should be written in a more high-level language. This could be Python which is the default language of choice in the machine learning community. However, other languages like Java might be more suitable. As a general consideration, it is preferred to use a typed (i.e. statically typed) language, as this is more scalable than an untyped (i.e. dynamically typed) language. If some algorithms would become part of the runtime bottleneck, it may also be an option to choose C/ C++ for runtime improvements on CPU.

An example technology stack for implementing embodiments according to the present invention is the following:

- (multi-)GPU:                                       Cuda
- Interface between Cuda and Java:    SWIG with C/ C++
- (multi-)CPU:                                       Java
- Debugging framework:                        Angular

Of course, the skilled person will understand that this specific technology stack is just presented as an example, and that many other technology stacks could also be chosen to support the implementation of embodiments according to the present invention.

**Claims**

1. A computer-implemented method for configuring a neural network, in order to optimize at least one objective function of the neural network according to a latency constraint defined for the neural network, the latency constraint representing a maximum time duration from input to the neural network up to output from the neural network and taking into account hardware performance of the computer implementing the method;

   wherein the neural network has a topology comprising a plurality of neuron groups, each neuron group of the plurality of neuron groups comprising at least one neuron and having a respective set of hyperparameters associated with said neuron group;
   wherein the at least one objective function comprises:

      - a neural network objective function corresponding with the neural network, wherein the neural network objective function is configured for optimizing an output of the neural network; and
      - a plurality of neuron group objective functions corresponding respectively to the plurality of neuron groups of the neural network, wherein each neuron group objective function is based on an accuracy contribution and a resource occupation, wherein the accuracy contribution and the resource occupation are due to the corresponding respective neuron group being included in the neural network;

   wherein the method comprises:

      - iteratively training the neural network by optimizing weights of the neurons of the neural network, based on the neural network objective function; and
      - iteratively adapting the topology of the neural network based on the plurality of neuron group objective functions, preferably using a method of genetic optimization.

2. The method of the previous claim, wherein the step of adapting the topology of the neural network comprises evaluating, for any given neuron group of the plurality of neuron groups, the resource occupation of the given neuron group, based on at least one hardware performance counter corresponding with resources of the computer occupied by the given neuron group;
   wherein the at least one hardware performance counter represents a load exerted on the computer implementing the method, the load being exerted at least by the given neuron group, the load relating to the given neuron group occupying any one or more of the following resources of the computer: memory, computation, and bus bandwidth.

3. The method of any previous claim, wherein the set of hyperparameters of said neuron group includes at least one of: a number of source connections representing inputs to said neuron group; a number of sink connections representing outputs from said neuron group; and a learning rate of said neuron group.

4. The method of any previous claim, wherein the step of iteratively adapting the topology of the neural network based on the plurality of neuron group objective functions using the method of genetic optimization comprises:

   - evaluating the plurality of neuron group objective functions corresponding with the plurality of neuron groups;
   - selecting at least one neuron group, preferably at least two neuron groups, of the plurality of neuron groups as parent or parents, based on the evaluating;
   - recombining respective features of the selected parent or parents to generate a new neuron group;
   - optionally mutating at least one feature of the new neuron group; and
   - adding the new neuron group to the neural network.

5. The method of any previous claim, wherein the step of adapting the topology of the neural network comprises:

   - removing at least one neuron group of the plurality of neuron groups from the neural network, if the neuron group objective function of the at least one neuron group to be removed meets a deletion criterion.

6. The method of any previous claim, wherein the step of adapting the topology of the neural network comprises maintaining an upper limit to the number of neuron groups subject to being changed in the step of adapting the topology.

7. The method of any previous claim, wherein at least one neuron group of the plurality of neuron groups comprises at least two neurons.

8. The method of any previous claim, wherein the neural network is of such a scale as to require a Kolmogorov complexity of at least 10 megabytes.

9. The method of any previous claim, wherein the step of training comprises using a method of backpropagation through time.

10. The method of any previous claim, wherein the latency constraint is an implicit consequence of an explicit throughput constraint imposed on the neural network.

11. A computer-implemented method of using a neural network configured using the method of any previous claim for inference.

12. A computer program comprising computer-executable instructions configured for, when executed by a computer, causing the computer to perform the steps of the method of any one of the previous claims.

13. A computer program product comprising a computer-readable medium having stored thereon the computer program of claim 12.

14. A data processing system for configuring a neural network, comprising means for carrying out the steps of the method of any one of claims 1-10

15. A data processing system for using a neural network for inference, comprising means for carrying out the steps of the method of claim 11.

FIG. 1

FIG. 2A

203A     203B     203C     203D     203E

| Training until convergence | → | Measure RBR and RNGOF | → | Replacement | → | Training until convergence | → | Measure RAR |

## FIG. 2B

204

205

Neuron Group B

207

Neuron Group A

| Input | | Neuron |
| Input | | Neuron |

Neuron Group B: Neuron, Neuron, Neuron

Output

Output

Neuron Group C: Neuron, Neuron

206

## FIG. 2C

301    302

303    304

Phenotype Parent A

Learning Rate
#Sink Connections
#Source Connections
Operator
Squashing Function
...

Phenotype Parent B

Learning Rate
#Sink Connections
#Source Connections
Operator
Squashing Function
...

Phenotype child

Learning Rate: A
#Sink Connections: A
#Source Connections: B
Operator: B + mutation
Squashing Function: A
...

FIG. 3

403    405

Full control thanks to
lots of hyperparamers

Low-level
Language

Configurable
Machine
Learning
Framework

Programmable                                    Configurable

401

402

Little Control because
of limited number of
hyperparameters

High-level
Language

FIG. 4    404

505

Configurable Machine Learning Framework + Genetic Algorithm

High Hyperparameter Entropy

502

501

Little Engineering Effort

Lots of Engineering Effort

Low-level Language

504

503

High-level Language

Low Hyperparameter Entropy

FIG. 5

601

602

603

604

Desired Profiling Results

Genetic Algorithm

Training

Read Hardware Performance Counters

Real Profiling Results

600

605

FIG. 6

FIG. 7

EP 4 209 970 A1

FIG. 8

FIG. 9A

FIG. 9B

FIG. 9C

FIG. 10

FIG. 11

FIG. 12

Europäisches
Patentamt

European
Patent Office

Office européen
des brevets

## EUROPEAN SEARCH REPORT

Application Number

EP 22 15 0602

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DONG ZHEN ET AL: "HAO: Hardware-aware Neural Architecture Optimization for Efficient Inference", 2021 IEEE 29TH ANNUAL INTERNATIONAL SYMPOSIUM ON FIELD-PROGRAMMABLE CUSTOM COMPUTING MACHINES (FCCM), IEEE, 9 May 2021 (2021-05-09), pages 50-59, XP033920980, DOI: 10.1109/FCCM51124.2021.00014 [retrieved on 2021-05-27] * abstract * * section I, III, III.A, IV * ----- | 1-15 | INV. G06N3/08 G06N3/063 ADD. G06N3/04 |

TECHNICAL FIELDS
SEARCHED (IPC)

G06N

The present search report has been drawn up for all claims

| Place of search | Date of completion of the search | Examiner |
|---|---|---|
| The Hague | 25 August 2022 | Papadakis, Georgios |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TOM HENIGHAN et al.** *Scaling Laws for Autoregressive Generative Modeling, https://arxiv.org/abs/2010.14701*